# EUROPEAN PATENT SPECIFICATION

(11) **EP 2 609 318 B1**
(45) Date of publication and mention of the grant of the patent: **07.01.2015**
(21) Application number: 10766333.8
(22) Date of filing: 27.08.2010
(51) Int. Cl.: F02G 5/02, F01N 3/04, F01N 3/36

(54) **ENGINE ARRANGEMENT COMPRISING A HEAT RECOVERY CIRCUIT AND AN EXHAUST GASES AFTER-TREATMENT SYSTEM**
MOTORANORDNUNG BESTEHEND AUS EINER WÄRMERÜCKGEWINNUNGSSCHALTUNG UND EINEM ABGASNACHBEHANDLUNGSSYSTEM
CONFIGURATION DE MOTEUR COMPRENANT UN CIRCUIT DE RÉCUPÉRATION DE CHALEUR ET UN SYSTÈME DE POST-TRAITEMENT DES GAZ D'ÉCHAPPEMENT

(43) Date of publication of application: 03.07.2013
(73) Proprietor: Renault Trucks, 69800 Saint Priest (FR)
(72) Inventor: LOMBARD, Benoit, F-69005 Lyon (FR)
(74) Representative: Putet, Gilles
(86) International application number: PCT/IB2010/002409
(87) International publication number: WO 2012/025776

(56) References cited:
- EP-A1- 2 098 696
- US-A1- 2006 021 332
- US-A1- 2010 064 670

## Description

### Field of the invention

The present invention relates to an engine arrangement comprising a heat recovery circuit for recovering energy and an exhaust gases after-treatment system, especially but not exclusively in a vehicle.

### Technological background

For many years, attempts have been made to improve internal combustion engines regarding various aspects, in particular regarding the reduction of air pollution due to undesirable components contained in exhaust gases formed by the combustion of fuel in the engine, and regarding engine efficiency, which has a direct impact on fuel consumption.

For these purposes, engines are conventionally equipped with several supplementary systems.

On the one hand, a selective catalytic reduction (SCR) system has been a standard feature in engine arrangements for many years, in particular in industrial vehicles, in order to treat nitrogen oxides (NOx) contained in exhaust gases. In such a system, exhaust gases, mixed with a reducer such as ammonia, is treated in a specific catalytic converter where nitrogen oxides are converted into water and nitrogen which are both non toxic substances. Ammonia may be introduced in the form of urea in an aqueous solution from which ammonia is obtained through hydrolysis. The urea solution is usually nebulised in the exhaust gas upstream from the catalytic converter. To this end, a urea injection nozzle is fitted on the exhaust line upstream from the catalytic converter. Ammonia could also be introduced in the form of a water solution of ammonia or of gaseous ammonia, the latter being less preferred because of its environmental and health impacts. Other suitable reducers include ethanol.

On the other hand, one conventional system to improve the engine efficiency is to provide the engine arrangement with a heat recovery circuit for recovering part of the energy which is otherwise wasted in the form of heat in the exhaust gases, in the engine cooling circuit, in the lubricating circuit, etc... Such heat recovery circuits include Rankine circuits in which a fluid flows in a closed loop and undergoes successive processes according to the Rankine thermodynamic cycle:
- the working fluid, which is a liquid at this stage, is pumped from low to high pressure;
- the high pressure liquid is evaporated into a gas by a hot fluid flowing in another circuit of the engine arrangement;
- the gas is expanded in an expander;
- finally, the gas is condensed.

As a result, at least part of the thermal energy of the hot fluid used to evaporate the Rankine fluid is recovered in the expander, for example under the form of mechanical, hydraulic or electrical energy. This thermal energy would otherwise be lost.

However, the provision in an engine arrangement of both a heat recovery circuit and of an exhaust gases after-treatment system involves the implementation of additional lines and components, which requires space and brings weight and cost. An example is shown for example in US 2010/064670.

It therefore appears that, from several standpoints, there is room for improvement in engine arrangements.

### Summary

It is an object of the present invention to provide an improved engine arrangement comprising a heat recovery circuit and an exhaust gases after-treatment system which can overcome the drawbacks encountered in conventional such engine arrangements.

According to the invention such an engine arrangement comprises:
- an exhaust gases after-treatment system comprising an injection device designed to inject an exhaust treatment fluid inside the exhaust line, for at least partially removing undesired components from the exhaust gases;
- a heat recovery circuit carrying a fluid in a loop, successively through at least a pump, an evaporator, an expander capable of generating mechanical power from the fluid expansion, and, optionally, a condenser; characterized in that the exhaust treatment fluid is the fluid carried by the heat recovery circuit, or derived therefrom, and in that a connecting line is branched from the heat recovery circuit and designed to supply the injection device with said exhaust treatment fluid.

Thus, in an engine arrangement according to the invention, the exhaust gases after-treatment system does not comprise a dedicated pump. The exhaust treatment fluid supplied to the injection device is moved by a pump which is already provided for other purposes, i.e. the pump of the heat recovery circuit.

In concrete terms, the heat recovery circuit is coupled to the circuit of the exhaust gases after-treatment system, as said circuits share the same pump, and as the same fluid flows either further in the heat recovery circuit or in the connecting line towards the injection device. Thus, said fluid must be both capable of undergoing the successive processes of a heat recovery cycle, and capable of directly or indirectly removing undesirable components contained in the exhaust gases. Alternatively, the exhaust treatment fluid may be derived from the fluid carried by the heat recovery circuit. For example, it may be a component thereof. Indeed, it can be provided to equip either the heat recovery circuit or the connecting line with a separator to retrieve only the desired component forming the exhaust treatment fluid, or any chemical reactor to transform the fluid into said exhaust treatment fluid. Such a chemical reactor can be a mere heat exchanger.

Therefore, thanks to the invention, there can be provided an engine arrangement including both a heat recovery circuit and an exhaust gases after-treatment system which requires one pump less than in such engine arrangements of the prior art. This results in an engine arrangement which is more compact and less expensive.

It also contributes to a better overall engine efficiency as it spares driving a pump which would otherwise require a fraction of the engine's work.

Advantageously, the connecting line branches from the heat recovery circuit downstream from the evaporator and upstream from the condenser. With such an arrangement, the exhaust treatment fluid is injected as a gas. Therefore, the crystallization problems encountered in some prior art systems can be avoided, since the fluid is not injected as a liquid which is liable to form a solid deposit on the exhaust pipe wall, on the internal side thereof, generally opposite of the injection point. Preferably, the connecting line branches from the heat recovery circuit upstream from the expander - where some condensation may occur.

The exhaust treatment fluid may comprise ammonia, such as pure ammonia and/or as an aqueous solution of ammonia (for example 20% ammonia in water)

Alternatively, the exhaust treatment fluid can comprise ethanol.

The engine arrangement can further comprise a fluid tank connected to the heat recovery circuit by a supply line. Indeed, the exhaust treatment fluid injected in the exhaust line is consumed, and therefore there is a need to continuously bring some fresh fluid towards the heat recovery circuit. Thus, the heat recovery circuit can be regarded a semi open circuit. Preferably, the supply line is connected to the heat recovery circuit upstream from the pump and downstream from the condenser.

In an implementation of the invention, which can be useful if the fluid is prone to freezing at low ambient temperatures, the engine arrangement also comprises a return line carrying at least some fluid from the heat recovery circuit to the fluid tank, said return line preferably branching from the heat recovery circuit downstream from the pump and upstream from the evaporator. In such a case, said fluid tank can be made devoid of heating means. Indeed, thanks to this feature, the part of the fluid flowing in the Rankine circuit which flows back to the fluid tank is warm, so it brings thermal energy to the fluid stored in the tank.

According to an embodiment of the invention, the exhaust gases after-treatment system comprises a catalytic device wherein the undesired components are at least partially removed, said catalytic device being located downstream from an injection inlet of the injection device (6), by which the exhaust treatment fluid is injected in the exhaust line.

The fluid flowing in the heat recovery circuit can be evaporated in the evaporator by hot exhaust gases flowing in the exhaust line, by a coolant of the engine flowing in a coolant circuit downstream from the engine; by engine oil; by compressed intake air of the engine; and/or by EGR (exhaust gas recirculation) gases, etc.... The evaporator can be located, on the exhaust line, upstream or downstream from the catalytic device, depending on the temperature needs. For example, the evaporator may be upstream from the injection inlet.

The engine arrangement preferably further comprises a control unit capable of controlling the pump operation in order to maintain an appropriate quantity of fluid in the heat recovery circuit. Indeed, as some exhaust treatment fluid is consumed in the exhaust gases after-treatment system, the pump works to bring fluid from the tank in order to maintain a sufficient quantity of fluid so that the heat recovery circuit remains efficient.

According to another aspect, the invention relates to a vehicle which comprises an engine arrangement as previously described.

However, the invention may also be used in other applications, for example in fixed industrial systems such as generators.

These and other features and advantages will become apparent upon reading the following description in view of the drawing attached hereto representing, as non-limiting examples, embodiments of an engine arrangement according to the invention.

### Brief description of the drawings

The following detailed description of one embodiment of the invention is better understood when read in conjunction with the appended drawing being understood, however, that the invention is not limited to the specific embodiment disclosed.

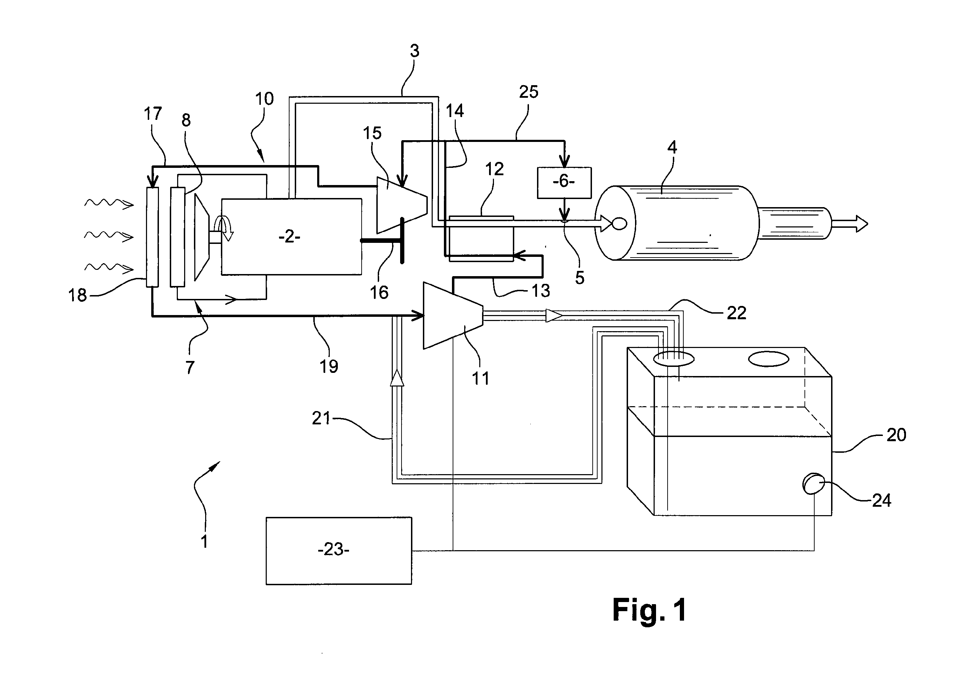

Figure 1 is a schematic drawing of an engine arrangement according to the invention.

### Detailed description

The engine arrangement 1 shown on the Figure comprises an internal combustion engine 2, which can be a diesel engine or a spark ignition engine. An exhaust line 3 is provided to direct the exhaust gases of the engine 2 towards a catalytic converter 4 before being released into the atmosphere.

In this example, the exhaust after-treatment system is of the selective catalytic reduction type (SCR), and is intended to remove at least part of the nitrogen oxides (NOx) from the exhaust gases. Upstream from the catalytic converter 4, an injection inlet 5 is provided in the exhaust line wall, through which a fluid can be injected by means of an injection device 6 which generally comprises a nozzle. The exhaust treatment fluid is a reducing fluid capable of reducing nitrogen oxides (NOx). In the illustrated embodiment, the fluid is a gas containing ammonia, possibly mixed with water vapour, as will be explained later. In practice, the nitrogen oxides mixed with the exhaust treatment fluid can be converted into water and nitrogen in the catalytic converter 4.

The engine arrangement 1 further comprises a coolant circuit 7 carrying an engine coolant such as water. The coolant is moved in a closed loop by means of a pump (not shown). The coolant enters the engine 2 in order to lower the engine temperature, thereby getting hotter. Then, downstream from the engine 2, the coolant is carried towards a radiator 8 where it is cooled down before entering the engine 2 again.

The engine arrangement 1 also comprises a heat recovery circuit 10 which allows some energy recovery. In this example, it is a Rankine-type circuit 10. It forms a semi open loop which is coupled to the injection device 6, and carries said exhaust treatment fluid as the Rankine fluid.

The Rankine circuit 10 comprises a pump 11 where the fluid is pumped from low to high pressure - around 3-6 bar for example. The fluid is then carried towards an evaporator 12 by a first line 13. The evaporator 12 is also located on the exhaust line 3, upstream from the injection inlet 5, so that the fluid flowing in the Rankine circuit 10 is evaporated in the evaporator 12 by the hot exhaust gases flowing in the exhaust line 3. Downstream from the evaporator 12, the gas flows through a second line 14 towards an expander 15.

In the illustrated embodiments, the expander is a turbine 15 which is capable of recovering the energy of the hot gas into mechanical energy. Said mechanical energy can be used on the engine crankshaft 16 or by an alternator (not shown) coupled to the turbine 15 to produce electricity, or could also be used by a pump or a compressor to pressurize a fluid. Electricity can be used in a hybrid vehicle (i.e. a vehicle powered by an internal combustion engine and an electric motor) or in a conventional vehicle to charge a battery, to power auxiliaries, etc. Alternatively, the expander 15 can be a scroll, a screw or a piston expander.

Downstream from the turbine 15, the gas, which has been expanded and cooled, flows in a third line 17 towards a condenser 18 in which it becomes a liquid again. In case the engine arrangement 1 is implemented on a vehicle, said condenser 18 is typically located on the front face of the vehicle. Downstream from the condenser 18, the fluid - as a liquid - is carried by a fourth line 19 towards the pump 11.

Furthermore, a heater (not shown - sometimes called regenerator) can be provided in the Rankine circuit 10, downstream from the pump 11 and upstream from the evaporator 12, in order to preheat the fluid flowing in the Rankine circuit 10 before it enters the evaporator 12. The fluid can be preheated by means of the fluid flowing in the third line 17 of the Rankine circuit 10, i.e. downstream from the turbine 15 and upstream from the condenser 18.

A connecting line 25 branches from the second line 14, between the evaporator 12 and the expander 15, in order to carry part of the gaseous reducing fluid towards the injection device 6. Thus, downstream from the evaporator 12, part of the fluid flowing in the second line 14 is directed towards the injection device 6 via the connecting line 25, in order to allow the treatment of exhaust gases, whereas the other part of this fluid will go on flowing in the second line 14 of the Rankine circuit 10.

The engine arrangement 1 may also be equipped with a fluid tank 20, which contains fresh exhaust treatment fluid or a precursor thereof. A supply line 21 is provided to supply fluid from the tank 20 to the Rankine circuit 10, said supply line coming out into the fourth line 19, upstream from the pump 11. A control unit 23 is provided in order to control the operation of pump 11 so as to maintain an appropriate quantity of fluid in the Rankine circuit 10 in spite of the fluid consumption in the injection device 6. Therefore, the Rankine circuit 10 is a semi open loop. If the exhaust treatment fluid is pure ammonia as a gas, the tank may contain ammonia. If the exhaust treatment fluid is a mixture of ammonia and water, the tank may contain the same mixture, or may contain a water solution of urea. Indeed, as known in conventional system, the urea, once injected in the Rankine circuit, will decompose and form ammonia.

Furthermore, a return line 22 may be provided to carry part of the fluid from the Rankine circuit 10 to the fluid tank 20. Said return line 22 may be branched-off from the first line 13 downstream from the pump 11 and upstream from the evaporator 12. Because the fluid going back to the tank 20 trough this return line 22 is warm, such features allows to dispense with equipping the tank 20 with heating means. However, the fluid temperature in the tank 20 can be monitored by the control unit 23 by means of an appropriate sensor 24. Moreover, for the same reason, there is no need to provide heated pipes for the supply line 21 and the return line 22.

In the engine arrangement according to the invention, the pump 11 of the Rankine circuit 10 makes it possible to move the fluid in the Rankine circuit 10, to supply reducing liquid to the exhaust gases after-treatment system (no dedicated pump being provided for this purpose). Furthermore, the same pump 11 can also bring some reducing fluid in the Rankine circuit 10 through supply line 21 following the consumption of said fluid in the exhaust gases after-treatment system, although a dedicated pump could be provided for this task.

Of course, the invention is not restricted to the embodiment described above by way of non-limiting example, but on the contrary it encompasses all embodiments thereof. For example, the exhaust after-treatment system could be of a different type, possibly for removing other undesirable substances from the exhaust gases. The heat recovery circuit could be based on a different cycle than the Rankine cycle, either derived from the Rankine cycle, such as the Kalina cycle or the supercritical Rankine cycle, or entirely different such as the Brayton or Ericsson cycles. The only requirement is that the exhaust after-treatment system and the heat recovery circuit must operate with at least one common fluid.

## Claims

1. An engine arrangement comprising:
- an internal combustion engine (2) and an exhaust line (3) capable of collecting exhaust gases from said engine (2);
- an exhaust gases after-treatment system comprising an injection device (6) designed to inject an exhaust treatment fluid inside the exhaust line (3) for at least partially removing undesired components from the exhaust gases
- a heat recovery circuit (10) carrying a fluid in a loop, successively through at least a pump (11), an evaporator (12), and an expander (15) capable of generating power from the fluid expansion;
**characterized in that** the exhaust treatment fluid is the fluid carried by the heat recovery circuit, or derived therefrom, and **in that** a connecting line (25) is branched from the heat recovery circuit (10) and designed to supply the injection device (6) with said exhaust treatment fluid.

2. The engine arrangement according to claim 1, **characterized in that** the connecting line (25) branches from the heat recovery circuit (10) downstream from the evaporator (12) and upstream from the expander (15).

3. The engine arrangement according to claim 1 or claim 2, **characterized in that** the exhaust treatment fluid comprises ammonia.

4. The engine arrangement according to claim 1 or claim 2, **characterized in that** the reducing fluid comprises ethanol.

5. The engine arrangement according to any one of claims 1 to 4, **characterized in that** it further comprises a fluid tank (20) connected to the heat recovery circuit (10) by a supply line (21).

6. The engine arrangement according to claim 5, **characterized in that** it comprises a return line (22) carrying the fluid from the heat recovery circuit (10) to the fluid tank (20), said return line (22) preferably branching from the heat recovery circuit (10) downstream from the pump (11) and upstream from the evaporator (12), and **in that** said fluid tank (20) is devoid of heating means.

7. The engine arrangement according to any one of claims 1 to 6, when depending on claim 3, **characterized in that** the exhaust gases after-treatment system comprises a catalytic device (4) located downstream from an injection inlet (5) of the injection device (6) by which the exhaust treatment fluid in injected in the exhaust line, wherein the undesired components are at least partially removed.

8. The engine arrangement according to any one of claims 1 to 7, **characterized in that** the fluid carried in the heat recovery circuit (10) is evaporated in the evaporator (12) by hot exhaust gases flowing in the exhaust line (3), by a coolant of the engine flowing in a coolant circuit downstream from the engine; by engine oil; by compressed intake air of the engine; and/or by EGR (exhaust gas recirculation) gases.

9. The engine arrangement according to any one of claims 1 to 8, when depending on claim 5, **characterized in that** it further comprises a control unit (23) capable of controlling the pump operation in order to maintain an appropriate quantity of fluid in the heat recovery circuit (10).

10. The engine arrangement according to any preceding claim, **characterized in that** the heat recovery circuit further comprises a condenser (18) downstream of the expander (15) and upstream of the pump (11).

11. A vehicle **characterized in that** it comprises an engine arrangement (1) according to any one of claims 1 to 10.

## Patentansprüche

1. Motoranordnung umfassend:
- einen Verbrennungsmotor (2) und eine Abgasleitung (3), die Abgase aus dem Motor (2) sammeln kann;
- ein Abgasnachbehandlungssystem, das eine Einspritzvorrichtung (6) umfasst, die dazu ausgelegt ist, ein Abgasbehandlungsfluid in das Innere der Abgasleitung (3) einzuspritzen, um unerwünschte Komponenten wenigstens teilweise aus den Abgasen zu entfernen;
- einen Wärmerückgewinnungskreislauf (10), der ein Fluid in einer Schleife nacheinander durch wenigstens eine Pumpe (11), einen Verdampfer (12) und eine Expansionseinrichtung (15) führt, die Energie aus der Fluidexpansion erzeugen kann;
**dadurch gekennzeichnet, dass** das Abgasbehandlungsfluid das Fluid ist, das durch den Wärmerückgewinnungskreislauf geführt wird, oder aus diesem abgeleitet wird, und dass eine Verbindungsleitung (25) von dem Wärmerückgewinnungskreislauf (10) abgezweigt ist und dazu ausgelegt ist, die Einspritzvorrichtung (6) mit dem Abgasbehandlungsfluid zu versorgen.

2. Motoranordnung nach Anspruch 1, **dadurch gekennzeichnet, dass** die Verbindungsleitung (25) von dem Wärmerückgewinnungskreislauf (10) stromabwärts von dem Verdampfer (12) und stromaufwärts von der Expansionseinrichtung (15) abzweigt.

3. Motoranordnung nach Anspruch 1 oder Anspruch 2, **dadurch gekennzeichnet, dass** das Abgasbehandlungsfluid Ammoniak umfasst.

4. Motoranordnung nach Anspruch 1 oder Anspruch 2, **dadurch gekennzeichnet, dass** das Reduktionsfluid Ethanol umfasst.

5. Motoranordnung nach irgendeinem der Ansprüche 1 bis 4, **dadurch gekennzeichnet, dass** es weiterhin einen Fluidtank (20) umfasst, der durch eine Versorgungsleitung (21) mit dem Wärmerückgewinnungskreislauf (10) verbunden ist.

6. Motoranordnung nach Anspruch 5, **dadurch gekennzeichnet, dass** sie eine Rückführleitung (22) umfasst, die das Fluid von dem Wärmerückgewinnungskreislauf (10) zu dem Fluidtank (20) führt, wobei die Rückführleitung (22) vorzugsweise von dem Wärmerückgewinnungskreislauf (10) stromabwärts von der Pumpe (11) und stromaufwärts von dem Verdampfer (12) abzweigt, und dass der Fluidtank (20) keine Heizeinrichtung aufweist.

7. Motoranordnung nach irgendeinem der Ansprüche 1 bis 6, wenn abhängig von Anspruch 3, **dadurch gekennzeichnet, dass** das Abgasnachbehandlungssystem eine katalytische Vorrichtung (4) umfasst, die sich stromabwärts von einem Einspritzeinlass (5) der Einspritzvorrichtung (6) befindet, durch die das Abgasbehandlungsfluid in die Abgasleitung eingespritzt wird, wobei die unerwünschten Komponenten wenigstens teilweise entfernt werden.

8. Motoranordnung nach irgendeinem der Ansprüche 1 bis 7, **dadurch gekennzeichnet, dass** das in dem Wärmerückgewinnungskreislauf (10) geführte Fluid in dem Verdampfer (12) durch in der Abgasleitung (3) strömende heiße Abgase, durch ein in einem Kühlmittelkreislauf stromabwärts von dem Motor strömendes Kühlmittel des Motors, durch Motoröl, durch komprimierte Ansaugluft des Motors und/oder durch AGR(Abgasrückführungs)-Gase verdampft wird.

9. Motoranordnung nach irgendeinem der Ansprüche 1 bis 8, wenn abhängig von Anspruch 5, **dadurch gekennzeichnet, dass** sie weiterhin eine Steuereinheit (23) umfasst, die den Pumpbetrieb steuern kann, um eine angemessene Fluidmenge in dem Wärmerückgewinnungskreislauf (10) aufrechtzuerhalten.

10. Motoranordnung nach irgendeinem vorhergehenden Anspruch, **dadurch gekennzeichnet, dass** der Wärmerückgewinnungskreislauf weiterhin einen Kondensator (18) stromabwärts von der Expansionseinrichtung (15) und stromaufwärts von der Pumpe (11) umfasst.

11. Fahrzeug, **dadurch gekennzeichnet, dass** es eine Motoranordnung (1) nach irgendeinem der Ansprüche 1 bis 10 umfasst.

## Revendications

1. Agencement de moteur comprenant :
- un moteur à combustion interne (2) et une ligne d'échappement (3) apte à collecter des gaz d'échappement provenant dudit moteur (2) ;
- un système de post-traitement des gaz d'échappement comprenant un dispositif d'injection (6) conçu pour injecter un fluide de traitement d'échappement à l'intérieur de la ligne d'échappement (3) pour retirer au moins partiellement des composants non souhaités des gaz d'échappement ;
- un circuit de récupération de chaleur (10) transportant un fluide dans une boucle, successivement à travers au moins une pompe (11), un évaporateur (12) et un détendeur (15) apte à générer de la puissance à partir de la détente du fluide ;
**caractérisé en ce que** le fluide de traitement d'échappement est le fluide transporté par le circuit de récupération de chaleur, ou dérivé de celui-ci, et **en ce qu'**une ligne de liaison (25) part en dérivation du circuit de récupération de chaleur (10) et est conçue pour alimenter le dispositif d'injection (6) avec ledit fluide de traitement d'échappement.

2. Agencement de moteur selon la revendication 1, **caractérisé en ce que** la ligne de liaison (25) part en dérivation du circuit de récupération de chaleur (10) en aval de l'évaporateur (12) et en amont du détendeur (15).

3. Agencement de moteur selon la revendication 1 ou la revendication 2, **caractérisé en ce que** le fluide de traitement d'échappement comprend de l'ammoniac.

4. Agencement de moteur selon la revendication 1 ou la revendication 2, **caractérisé en ce que** le fluide réducteur comprend de l'éthanol.

5. Agencement de moteur selon l'une quelconque des revendications 1 à 4, **caractérisé en ce qu'**il comprend en outre un réservoir de fluide (20) relié au circuit de récupération de chaleur (10) par une ligne d'alimentation (21).

6. Agencement de moteur selon la revendication 5, **caractérisé en ce qu'**il comprend une ligne de retour (22) transportant le fluide à partir du circuit de récupération de chaleur (10) jusqu'au réservoir de fluide (20), ladite ligne de retour (22) partant de préférence en dérivation du circuit de récupération de chaleur (10) en aval de la pompe (11) et en amont de l'évaporateur (12), et **en ce que** ledit réservoir de fluide (20) est dépourvu de moyens de chauffage.

7. Agencement de moteur selon l'une quelconque des revendications 1 à 6, lorsqu'elle dépend de la revendication 3, **caractérisé en ce que** le système de post-traitement des gaz d'échappement comprend un dispositif catalytique (4) situé en aval d'une entrée d'injection (5) du dispositif d'injection (6) par laquelle le fluide de traitement d'échappement est injecté dans la ligne d'échappement, les composants non souhaités étant au moins partiellement retirés.

8. Agencement de moteur selon l'une quelconque des revendications 1 à 7, **caractérisé en ce que** le fluide transporté dans le circuit de récupération de chaleur (10) est évaporé dans l'évaporateur (12) par des gaz d'échappement chauds s'écoulant dans la ligne d'échappement (3), par un réfrigérant du moteur s'écoulant dans un circuit de réfrigérant en aval du moteur ; par de l'huile de moteur ; par de l'air d'admission comprimé du moteur ; et/ou par des gaz RGE (recirculation des gaz d'échappement).

9. Agencement de moteur selon l'une quelconque des revendications 1 à 8, lorsqu'elle dépend de la revendication 5, **caractérisé en ce qu'**il comprend en outre une unité de commande (23) apte à commander le fonctionnement de la pompe afin de maintenir une quantité appropriée de fluide dans le circuit de récupération de chaleur (10).

10. Agencement de moteur selon l'une quelconque des revendications précédentes, **caractérisé en ce que** le circuit de récupération de chaleur comprend en outre un condenseur (18) en aval du détendeur (15) et en amont de la pompe (11).

11. Véhicule **caractérisé en ce qu'**il comprend un agencement de moteur (1) selon l'une quelconque des revendications 1 à 10.
